# EUROPEAN PATENT SPECIFICATION

(11) **EP 4 602 350 B1**
(45) Date of publication and mention of the grant of the patent: **19.08.2026**
(21) Application number: 23789985.1
(22) Date of filing: 13.10.2023
(51) Int. Cl.: G01N 21/64, G01N 21/65, G01J 3/44, G01J 3/02, G01J 3/10, G01J 3/18, G01J 3/28

(54) **OPTICAL APPARATUS AND METHOD FOR MEASURING A PLURALITY OF TARGETS USING A SINGLE PHOTON AVALANCHE DETECTOR**
OPTISCHE VORRICHTUNG UND VERFAHREN ZUR MESSUNG MEHRERER ZIELE UNTER VERWENDUNG EINES EINZELPHOTONEN-LAWINENDETEKTORS
APPAREIL OPTIQUE ET PROCÉDÉ DE MESURE D'UNE PLURALITÉ DE CIBLES À L'AIDE D'UN DÉTECTEUR D'AVALANCHE À PHOTON UNIQUE

(30) Priority: 14.10.2022 FI 20225932
(43) Date of publication of application: 20.08.2025
(73) Proprietor: Oulun Yliopisto, 90570 Oulun (FI)
(72) Inventor: NISSINEN, Ilkka, 90570 Oulu (FI); NISSINEN, Jan, 90570 Oulu (FI); TALALA, Tuomo, 90570 Oulu (FI); KEKKONEN, Jere, 90570 Oulu (FI)
(74) Representative: Kolster Oy Ab
(86) International application number: PCT/EP2023/078446
(87) International publication number: WO 2024/079304

(56) References cited:
- CN-A- 108 844 930
- CN-A- 110 108 677
- US-A1- 2007 196 815
- KEKKONEN JERE ET AL: "Depth Analysis of Semi-Transparent Media by a Time-Correlated CMOS SPAD Line Sensor-Based Depth-Resolving Raman Spectrometer", IEEE SENSORS JOURNAL, IEEE, USA, vol. 19, no. 16, 15 August 2019 (2019-08-15), pages 6711 - 6720, XP011735599, ISSN: 1530-437X, [retrieved on 20190716], DOI: 10.1109/JSEN.2019.2913222
- KEKKONEN JERE ET AL: "Single Burst Depth-Resolving Raman Spectrometer Based on a SPAD Array with an On-Chip TDC to Analyse Heterogenous Liquid Samples", 2019 IEEE NORDIC CIRCUITS AND SYSTEMS CONFERENCE (NORCAS): NORCHIP AND INTERNATIONAL SYMPOSIUM OF SYSTEM-ON-CHIP (SOC), IEEE, 29 October 2019 (2019-10-29), pages 1 - 5, XP033662755, DOI: 10.1109/NORCHIP.2019.8906902
- KEKKONEN JERE ET AL: "On the Spectral Quality of Time-Resolved CMOS SPAD-Based Raman Spectroscopy With High Fluorescence Backgrounds", IEEE SENSORS JOURNAL, IEEE, USA, vol. 20, no. 9, 10 January 2020 (2020-01-10), pages 4635 - 4645, XP011781781, ISSN: 1530-437X, [retrieved on 20200402], DOI: 10.1109/JSEN.2020.2966119
- BÖHMER MARTIN ET AL: "Time-resolved confocal scanning device for ultrasensitive fluorescence detection", REVIEW OF SCIENTIFIC INSTRUMENTS, AMERICAN INSTITUTE OF PHYSICS, 2 HUNTINGTON QUADRANGLE, MELVILLE, NY 11747, vol. 72, no. 11, 1 November 2001 (2001-11-01), pages 4145 - 4152, XP012038888, ISSN: 0034-6748, DOI: 10.1063/1.1406926

## Description

### Field

The invention relates to an optical apparatus and an optical method.

### Background

In an optical measurement, an optical radiation source generates an optical pulse, and directs the optical pulse to a measured object. The optical radiation interacts with the measured object and the optical radiation interacted with the measured object is gathered and analyzed for determining one or more properties of the measured object. Examples of this kind of optical measurement are Raman spectroscopy, fluorescence measurements. More generally, the optical measurement may be based on non-elastic and/or elastic scattering. However, there is a desire to improve the optical measurement.

### Brief description

The present invention seeks to provide an improvement in the measurements.

The invention is defined by the independent claims. Embodiments are defined in the dependent claims.

If one or more of the embodiments is considered not to fall under the scope of the independent claims, such an embodiment is or such embodiments are still useful for understanding features of the invention.

### List of drawings

Example embodiments of the present invention are described below, by way of example only, with reference to the accompanying drawings, in which
Figure 1A illustrates an example of a measurement configuration;
Figure 1B illustrates an example of a temporal distribution of different targets;
Figure 2 illustrates examples of a multipoint Raman measurement with a) a two-dimensional CCD sensor, b) a time-resolved CMOS SPAD line sensor;
Figure 3 shows photographs of a sunflower oil-ethanol emulsion as an example;
Figure 4 illustrates an example of mean triple measurement data of sunflower oil-ethanol emulsion monitoring for a period of 160-180 s;
Figure 5 illustrates an example of normalized spectra of sunflower oil-ethanol emulsion at a) 0-2 s, and b) 178-180 s;
Figure 6 illustrates an example of contributions of Raman signals at 880 cm⁻¹ and 1660 cm⁻¹ to the total Raman signal during the 180 s period;
Figure 7 illustrates examples of a) TCSPC histogram at 178-180 s (average of 256 channels). b) fluorescence lifetimes during the 180 s period; and
Figure 8 illustrates of an example of a flow chart of a measuring method.

### Description of embodiments

The following embodiments are only examples. Although the specification may refer to "an" embodiment in several locations, this does not necessarily mean that each such reference is to the same embodiment(s), or that the feature only applies to a single embodiment.

The articles "a" and "an" give a general sense of entities, structures, components, compositions, operations, functions, connections or the like in this document. Note also that singular terms may include pluralities.

Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

The term "about" means that quantities or any numeric values are not exact and typically need not be exact. The reason may be tolerance, resolution, measurement error, rounding off or the like, or a fact that the feature of the solution in this document only requires that the quantity or numeric value is approximately that large. A certain tolerance is always included in real life quantities and numeric values.

It should be noted that while Figures illustrate various embodiments, they are simplified diagrams that only show some structures and/or functional entities. The connections shown in the Figures may refer to logical or physical connections. It is apparent to a person skilled in the art that the described apparatus may also comprise other functions and structures than those described in Figures and text. It should be appreciated that details of some functions, structures, and the signalling used for measurement and/or controlling are irrelevant to the actual invention. Therefore, they need not be discussed in more detail here.

Raman spectroscopy has been used for a wide variety of process monitoring applications. For example, blending and crystallization in pharmaceutical processes [1], [2], cell culture bioreactors [3], yeast fermentation [4], food quality [5], and content of polymer blends [6] have been monitored by means of in-line Raman spectroscopy. Typically, only a single point in a process is monitored by one spectrometer, but multipoint measurement setups have also been reported.

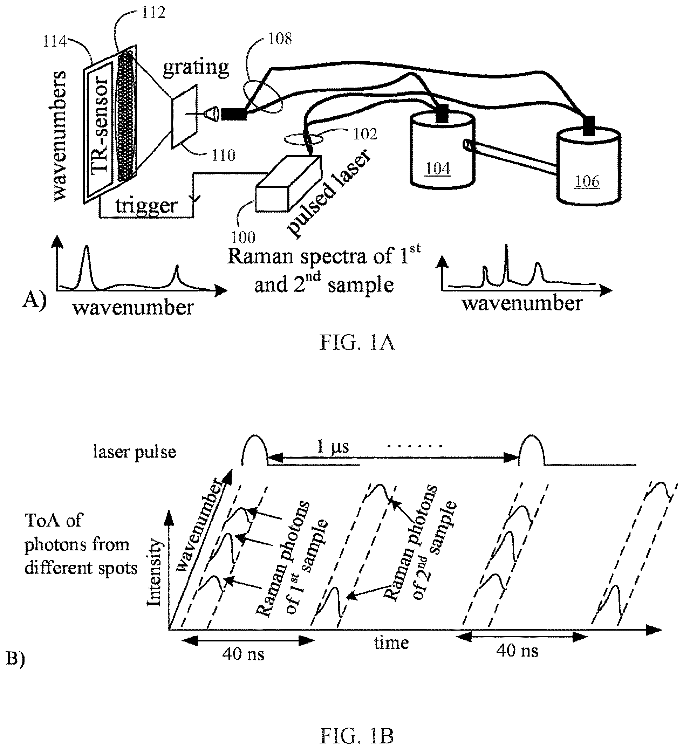

Fig. 1A illustrates an example of a measurement configuration. An apparatus comprises an optical radiation source 100 which generates an optical pulse repeatedly. The optical radiation source 100 may be a laser, for example. The optical radiation source 100 directs each optical pulse to a first optical path arrangement 102, which splits each optical pulse and direct it to at least two targets 104, 106.

A second optical path arrangement 108 receives optical radiation from an interaction between each of the optical pulses and each of the targets 104, 106. The second optical path arrangement 108 transfers the optical radiation to an optical wavelength separator 110, which directs different wavelength bands of the optical radiation to different single photon avalanche detector elements of a detector 112 based on dispersion caused by the optical wavelength separator 110.

The first and the second optical path arrangements 102, 108 cause a propagation delay that is unique for each of the targets 104, 106 in order to cause receptions of the optical radiation from different targets 104, 106 to be temporally separate at the single photon avalanche detector elements of a single array structure.

A timing controller 114 triggers detection intervals of the single photon avalanche detector elements ON and OFF synchronously with the delays of the first and second optical paths 102, 108 and generation of each of the optical pulses, and allows the single photon avalanche detector (SPAD) elements to detect photons of the optical radiation only during each of the detection intervals that are temporally matched with the interactions between each of the optical pulses and the targets 104, 106 and that are shorter than the propagation delays.

The single photon avalanche detector elements of the detector 112 output electric signals synchronously with the detection intervals for causing the electric signals to correspond to distribution of wavelengths of the optical radiation of only one of the targets 104, 106 at each output moment.

The SPADs are gated by a timing controller 114 that comprises an electric circuit. The SPADs detect photons only during a gating interval. The timing controller 114 sets a beginning of the gating interval in relation to the first optical path arrangement 102 from the optical radiation source 100 to the measured targets 104, 106 and the second optical path arrangement 108 from the measured targets 104, 106 to the SPADs. The duration of detection interval may be set or it may be as short as possible such that the length of the interval is limited by operational restrictions of the electric components. The gating can be varied if the optical path is altered. Each acquisition period of the SPADs may be timed to begin in relation to output of optical pulse from the optical radiation source 100, for example. Each detecting element then outputs a signal in response to an interaction with a single photon during the gating interval.

In an embodiment, at least one of the first and second optical path arrangements 102, 108 may comprise at least one optical fiber.

In an embodiment, at least one of the first and second optical path arrangements 102, 108 may cause a unique propagation delay for one of the targets 104, 106 with respect to a propagation delay of any other target of the targets 104, 106.

In an embodiment, a timing controller 114 is configured to trigger the optical source 100 to output the optical pulse and the detection period of the single photon avalanche detector elements in a determined temporal relation with respect to each other.

In an embodiment, the optical separator 110 is configured to direct different wavelengths of the optical radiation to different angles toward the single photon avalanche detector elements for causing different single photon avalanche detector elements to receive different wavelength bands of the optical radiation.

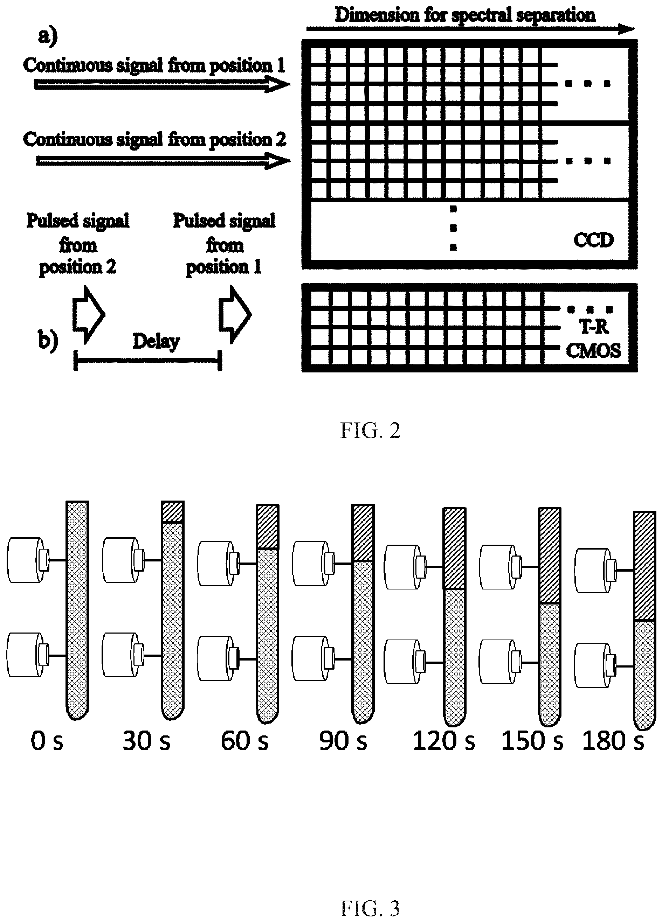

Gas detection from two positions was shown in [7], and a measurement setup for measuring waste waters in ten positions was demonstrated in [8]. In these systems, the capability for measuring Raman spectra from multiple positions is based on two dimensions of a pixel array in a CCD sensor (CCD=charge-coupled device). While one dimension is used for separating different wavelengths, another dimension can be used to separate the spectra from different positions. The same method has also been used for imaging Raman spectroscopy. Raman images of living cells were created by measuring spectra simultaneously from 48 measurement points in [9], and peripheral nerve imaging was made with 32 measurement points in [10]. In both cases, Raman signal from multiple measurement points was collected to a rectangle-to-linear optical fiber bundle that spreads signals from different image points to separate slices on a CCD sensor. This method is illustrated for two measurement points in Fig. 2 a).

During the past decade, in addition to conventional combination of continuous wave excitation and a CCD sensor, pulsed excitation and time-resolved CMOS SPAD (single photon avalanche diode) line sensors have been used in Raman spectroscopy. Advantages of time-resolved measurement are abilities to separate the Raman signal from fluorescence emission in time domain [11], to measure the fluorescence lifetime which gives additional information about the sample [12], and to make depth-resolved measurements [13]. [13] discloses a depth-resolving Raman spectrometer based on an adjustable time-correlated SPAD line sensor, wherein a sample is illuminated by collimated short laser pulses to derive a Raman spectrum. Raman scattered photons having different wavelengths are diverged upon facing a diffraction grating so that the position of each SPAD in the line sensor corresponds to a specific range of wavelengths. The illumination of the sample and collection of the backscattered Raman photons happen through the same optical axis (reflectance configuration with zero source-to-detector distance). A small portion of the laser pulse is guided via a beam splitter to an optical detector coupled with a comparator that generates a logic level trigger signal passed through adjustable delay units.

In this work as shown in Figs 1A and 1B, we describe and demonstrate a novel method where Raman spectra may be measured from multiple points simultaneously. This method is based on two essential components. The first component, an optical fiber system i.e. the first optical path arrangement 102 for excitation and a Raman signal collection i.e. the second optical path arrangement 108, may generate a temporal difference of some tens of nanoseconds for pulsed signals from different measurement points, for example. The second component, a time-resolved CMOS SPAD line sensor, is designed to be able to make multiple measurements at intervals of some tens of nanoseconds. As a result, Raman signals from multiple measurement points can be separated in time domain, and an active area of the sensor, the whole active area, for example, can be utilized for all measurement points. This is illustrated in Fig. 2 b). Naturally, all other above-mentioned advantages of time-resolved measurement are available for multipoint measurement, too.

### DESIGN

An optical system is needed to deliver the excitation laser light into the sample points and to collect the Raman scattered light to the spectrometer. To generate a multipoint measurement system using a single pulsed laser source and a single spectrometer, the excitation laser pulse needs to be split and guided to the different measurement points, and the collected Raman signal from the measurement points needs to be combined and directed to the time resolved spectrometer.

An all-fiber optical split and combination system without moving parts may be taken as the design aim, for example, to make the system robust and easily adaptable for different measurement point separation lengths. A multipoint system consisting of two measurement points may be constructed and tested, consisting of of-the-shelf multimode (MM) fiber optical patch cables and components together with two Raman probes from Thunder Optics.

A small fraction of the excitation laser is first split to the trigger detector and the other part may be coupled with a 62.5 micron graded-index fiber, for example, which may then be butt coupled into a 50:50 fused fiber optic splitter, for example. The two output fibers of the 50:50 splitter, for example, may then be butt coupled to two patch fibers of different lengths, for example, to generate a temporal difference between the arrival of the excitation beam on the two probes. The temporal difference to achieve a suitable delay on the other probe excitation timing may be achieved using 10 m and 2 m patch cables, for example, corresponding roughly to a timing difference of about 40 ns on the excitation pulse on the probes.

The collection of Raman signal from the probes may be done using 200 micron core diameter equal length MM fibers, for example. The fibers from the probes may be butt-coupled in to a 2x2 fused fiber optical 50/50-combiner of the same fiber type, for example. The combiner may mix half of the Raman signal from both probes to the two output fibers, which may then be butt-coupled in to a bifurcated fiber patch cable. The other end of the bifurcated fiber cable may then be placed directly behind the slit of the spectrometer, to have the two ends of the cable inline with the slit.

The sensor of the spectrometer, a SPAD line sensor manufactured in 110-nm CMOS technology, for example, may be designed for time-correlated single photon counting (TCSPC) applications, especially for time-resolved Raman spectroscopy. The main parts of the sensor may be a 256 × 8 SPAD array and 256 time-to-digital converters (TDCs), for example. Temporal resolution of 7-bit TDCs may be adjusted over a range of 25.6-65 ps, for example, and the pitch and the fill-factor of the SPAD array may be about 32.9 µm and about 37.9%, respectively, for example. Data read-out and controlling of sensor operation may be done with Opal Kelly XEM7310-A200 FPGA integration module, for example. A detailed description for the sensor is given in [18].

An example feature for multipoint Raman measurements is a triple measurement operation mode of the sensor. In the triple measurement mode, the sensor repeats a normal measurement three times at intervals of tens of nanoseconds, for example, for each excitation pulse (the exact interval between three measurements may be adjusted in a range of ~35-100 ns). SPADs are loaded separately for the three measurements, and between the measurements, SPADs may be actively quenched. Therefore, measurements are completely separate, i.e. photon detections during previous measurements do not affect the following measurements. For each excitation pulse, TCSPC results of three measurements may be initially stored to registers on the sensor chip, and may then be transferred to the FPGA which may accumulate 768 (3 · 256) TCSPC histograms.

### RESULTS

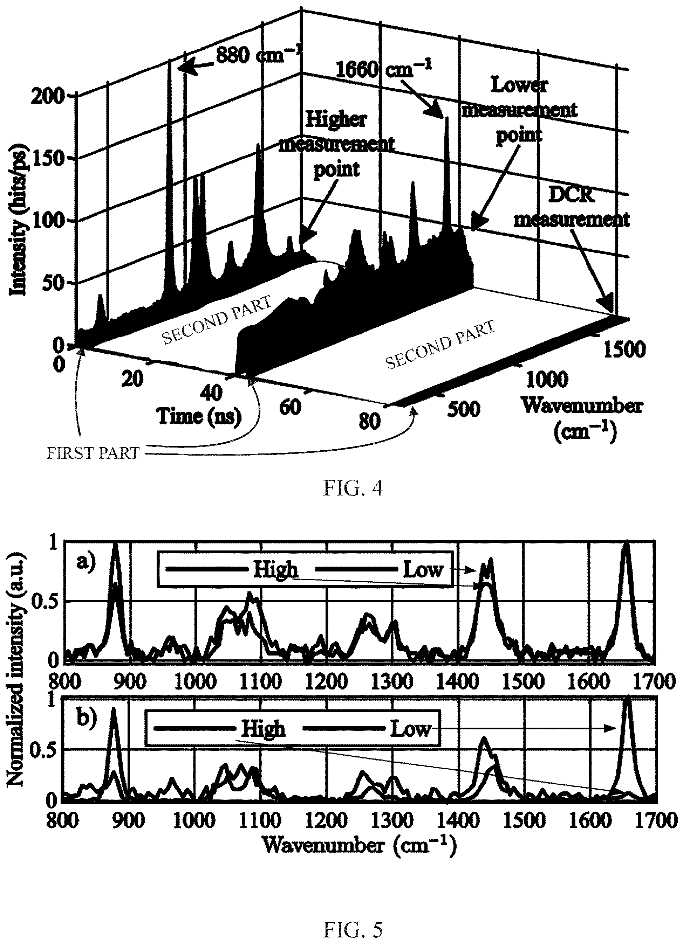

To demonstrate the multipoint Raman measurement, an oil-ethanol emulsion was measured. The interest for such a sample is related to its potential as an alternative fuel for diesel engines [14]-[17]. An emulsion of pure ethanol (Etax Aa, for example) and edible sunflower oil was made in a test tube, and the composition of the mixture was monitored for a 180-second observation period (90 measurements, 2 s each) at two heights as shown in Fig. 3. The first measurement of triple measurement mode collects signal from the higher measurement point and the second measurement collects signal from the lower measurement point. The third measurement is made without excitation, and therefore it can be used as a real-time dark count rate (DCR) measurement. Average result of the last ten measurements (last 20 s) is shown in Fig. 4. In Fig. 4, three first parts are the three measurements of the triple measurement mode. During the second parts between the measurements, SPADs are quenched, and the sensor is not detecting photons.

Normalized Raman spectra from higher (black line) and lower (blue line) measurement points are shown in Fig. 5 a) for the first two-second acquisition time. These two spectra are quite similar which is expected as the emulsion is fairly homogeneous right after mixing. Normalized Raman spectra for the last two-second acquisition are shown in Fig. 5 b). The Raman peak of ethanol at 880 cm⁻¹ and the Raman peak of sunflower oil at 1660 cm⁻¹ clearly show that components of the emulsion have separated, oil is on the bottom and ethanol is on the top. Compared to spectra in Fig. 5 b), the signal-to-noise ratio of spectra in Fig. 5 a) is lower due to low signal level caused by opacity of the emulsion. Time gate width of 810 ps (TDC bins 11-40, resolution 27 ps) was used for spectra in Fig. 5. Post-processing for spectra in Fig. 5 includes dark count subtraction and baseline subtraction (DCR measured simultaneously by the third measurement of triple measurement mode). Timing skew compensation, photon detection efficiency compensation, or averaging filtering was not applied.

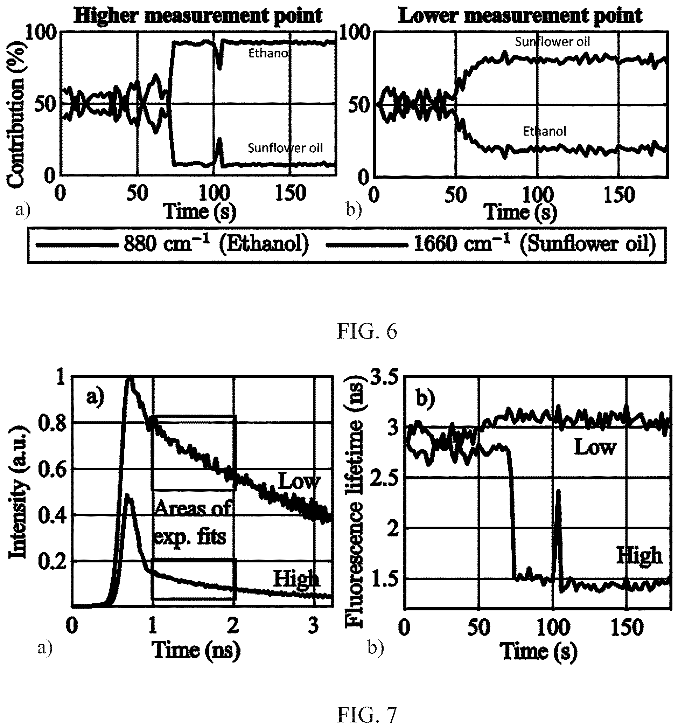

A percentage contributions of Raman signals at 880 cm⁻¹ and at 1660 cm⁻¹ to the total Raman signal are shown as function of time in Fig. 6 (the sum of Raman signals at 880 cm⁻¹ and 1660 cm⁻¹ was used as a total Raman signal, other wavenumbers were ignored). Even with this extremely simple data processing, the separation of contents is clearly shown in Fig. 6. Curves in Fig. 6 agree well with Fig. 3, in which the photographs show that at 60 s, the emulsion is not yet separated at measurement points but at 90 s, the contents look clear at both measurement points and unseparated emulsion only exists in the middle of the test tube.

Time-correlated single photon counting (TCSPC) histograms (average of all 256 channels) for a period of 178-180 s are shown in Fig. 7 a). The histogram of the higher measurement point consists of a clear pulsed part at 0.5-1 ns (Raman signal from ethanol) and a weak tail after 1 ns (combination of fluorescence emission from oil residues and a diffusion tail of a pulsed Raman signal). The histogram of the lower measurement part is heavily dominated by fluorescence emission from oil but a pulsed part at 0.5-1 ns can also be observed. Fluorescence lifetimes were estimated from TCSPC histograms by fitting a single-term exponential fit to a fluorescence tail part at 1-2 ns and the results are shown in Fig. 7 b). At lower measurement point, the fluorescence lifetime is approximately constant ~3 ns for the whole 180 s period. This indicates that sunflower oil exists at lower part of the test tube for the whole observation period. At higher measurement point, the fluorescence lifetime stays at ~2.8 ns for a period of 72 s and then quickly decreases to ~1.5 ns clearly showing that the top surface of the emulsion drops below the higher measurement point. After that, mainly ethanol is measured at the higher measurement point. The only clear exception is an occasional oil drop that is observed at 102-104 s. This oil drop can be noticed by Raman monitoring (Fig. 6 a)) and by fluorescence lifetime monitoring (Fig. 7 b)) alike. It should be noted that the absolute accuracy of these fluorescence lifetime estimates is low because the instrument response function (IRF) of the system was not characterized and compensated for. However, relative chances of fluorescence lifetime can be seen clearly even without any compensation for the IRF.

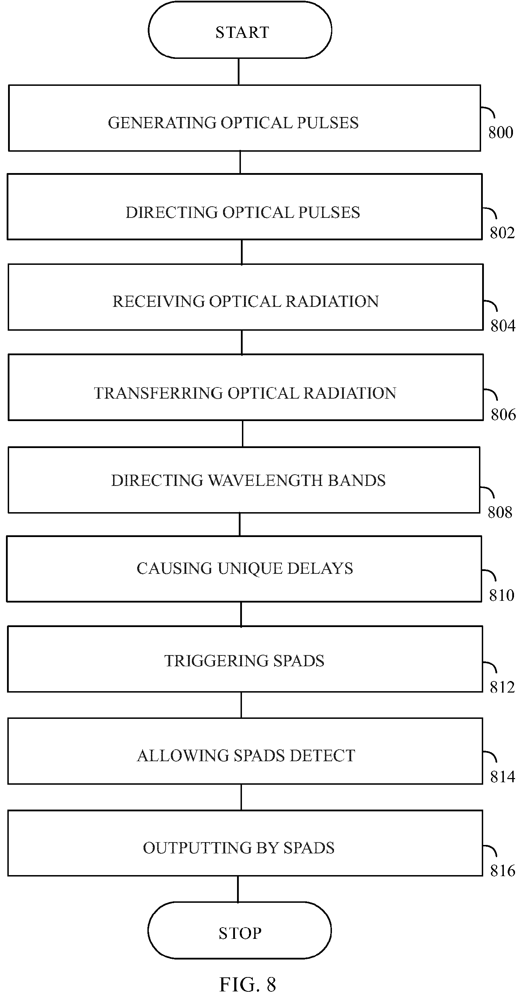

Fig. 8 is a flow chart of the optical measurement method. A purpose of Fig. 8 is not to present the steps in a chronological order but merely present the steps of the method. In step 800, an optical pulse repeatedly is generated by an optical radiation source 100. In step 802, each optical pulse is directed to a first optical path arrangement 102, which splits each optical pulse and directs it to at least two targets 104, 106. In step 804, optical radiation is received receiving from an interaction between each of the optical pulses and each of the targets 104, 106 by a second optical path arrangement 108. In step 806, the optical radiation is transferred to an optical wavelength separator 110 by the second optical path arrangement 108. In step 808, different wavelength bands of the optical radiation are directed to different single photon avalanche detector elements of a detector 112 by the optical wavelength separator 110. In step 810, a propagation delay that is unique for each of the targets 104, 106 is caused by the first and the second optical path arrangements 102, 108 in order to cause receptions of the optical radiation from different targets 104, 106 to be temporally separate at the single photon avalanche detector elements. In step 812, detection intervals of the single photon avalanche detector elements are triggered ON and OFF synchronously with the delays of the first and second optical paths 102, 108 and generation of each of the optical pulses by a timing controller 114. In step 814, the single photon avalanche detector elements are allowed to detect photons of the optical radiation only during each of the detection intervals that are temporally matched with the interactions between each of the optical pulses and the targets 104, 106 and that are shorter than the propagation delays. In step 816, electric signals are output synchronously with the detection intervals by the single photon avalanche detector elements of the detector 112, for causing the electric signals to correspond to distribution of wavelengths of the optical radiation of only one of the targets 104, 106 at each output moment.

One or more steps of the method shown in Fig. 8 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the processes on the basis of the measurements.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

The term "computer" includes a computational device that performs logical and arithmetic operations. For example, a "computer" may comprise an electronic computational device, such as an integrated circuit, a microprocessor, a mobile computing device, a laptop computer, a tablet computer, a personal computer, or a mainframe computer. A "computer" may comprise a central processing unit, an ALU (arithmetic logic unit), a memory unit, and a control unit that controls actions of other components of the computer so that steps of a computer program are executed in a desired sequence. A "computer" may also include at least one peripheral unit that may include an auxiliary memory (such as a disk drive or flash memory), and/or may include data processing circuitry.

A user interface means an input/output device and/or unit. Nonlimiting examples of a user interface include a touch screen, other electronic display screen, keyboard, mouse, microphone, handheld electronic game controller, digital stylus, display screen, speaker, and/or projector for projecting a visual display.

### REFERENCES

[1] G. J. Vergote et al., "In-line monitoring of a pharmaceutical blending process using FT-Raman spectroscopy," Eur. J. Pharm. Sci., vol. 21, no. 4, 2004, doi: 10.1016/j.ejps.2003.11.005.
[2] G. Févotte, "In situ Raman spectroscopy for in-line control of pharmaceutical crystallization and solids elaboration processes: A review," Chemical Engineering Research and Design, vol. 85, no. 7 A. 2007, doi: 10.1205/cherd06229.
[3] N. R. Abu-Absi et al., "Real time monitoring of multiple parameters in mammalian cell culture bioreactors using an in-line Raman spectroscopy probe," Biotechnology and Bioengineering, vol. 108, no. 5. 2011, doi: 10.1002/bit.23023.
[4] R. Schalk et al., "Non-contact Raman spectroscopy for in-line monitoring of glucose and ethanol during yeast fermentations," Bioprocess Biosyst. Eng., vol. 40, no. 10, 2017, doi: 10.1007/s00449-017-1808-9.
[5] T. A. Lintvedt, P. V Andersen, N. K. Afseth, B. Marquardt, L. Gidskehaug, and J. P. Wold, "Feasibility of In-Line Raman Spectroscopy for Quality Assessment in Food Industry: How Fast Can We Go?," Appl. Spectrosc., vol. 0, no. 0, p. 00037028211056931, doi: 10.1177/00037028211056931.
[6] S. Zhu, Z. Song, S. Shi, M. Wang, and G. Jin, "Fusion of near-infrared and raman spectroscopy for in-line measurement of component content of molten polymer blends," Sensors (Switzerland), vol. 19, no. 16, 2019, doi: 10.3390/s19163463.
[7] C. Shen, C. Wen, X. Huang, and X. Long, "A versatile multiple-pass raman system for industrial trace gas detection," Sensors, vol. 21, no. 21, 2021, doi: 10.3390/s21217173.
[8] T. M. Vess and S. M. Angel, "Near-visible Raman instrumentation for remote multipoint process monitoring using optical fibers and optical multiplexing," in Environmental and Process Monitoring Technologies, 1992, vol. 1637, pp. 118-125, doi: 10.1117/12.59330.
[9] M. Okuno and H. Hamaguchi, "Multifocus confocal Raman microspectroscopy for fast multimode vibrational imaging of living cells," Opt. Lett., vol. 35, no. 24, 2010, doi: 10.1364/ol.35.004096.
[10] Y. Kumamoto, Y. Harada, H. Tanaka, and T. Takamatsu, "Rapid and accurate peripheral nerve imaging by multipoint Raman spectroscopy," Sci. Rep., vol. 7, no. 1, 2017, doi: 10.1038/s41598-017-00995-y.
[11] J. Kostamovaara, J. Tenhunen, M. Kögler, I. Nissinen, J. Nissinen, and P. Keränen, "Fluorescence suppression in Raman spectroscopy using a time-gated CMOS SPAD," Opt. Express, vol. 21, no. 25, 2013, doi: 10.1364/oe.21.031632.
[12] G. Giraud et al., "Fluorescence lifetime biosensing with DNA microarrays and a CMOS-SPAD imager," Biomed. Opt. Express, vol. 1, no. 5, 2010, doi: 10.1364/boe.1.001302.
[13] J. Kekkonen, J. Nissinen, and I. Nissinen, "Depth Analysis of SemiTransparent Media by a Time-Correlated CMOS SPAD Line Sensor-Based Depth-Resolving Raman Spectrometer," IEEE Sens. J., vol. 19, no. 16, pp. 6711-6720, 2019, doi: 10.1109/JSEN.2019.2913222.
[14] M. S. Kumar, J. Bellettre, and M. Tazerout, "The use of biofuel emulsions as fuel for diesel engines: A review," Proceedings of the Institution of Mechanical Engineers, Part A: Journal of Power and Energy, vol. 223, no. 7. 2009, doi: 10.1243/09576509JPE758.
[15] N. Arpornpong, C. Attaphong, A. Charoensaeng, D. A. Sabatini, and S. Khaodhiar, "Ethanol-in-palm oil/diesel microemulsion-based biofuel: Phase behavior, viscosity, and droplet size," Fuel, vol. 132, 2014, doi: 10.1016/j.fuel.2014.04.068.
[16] A. Kerihuel, M. Senthil Kumar, J. Bellettre, and M. Tazerout, "Ethanol animal fat emulsions as a diesel engine fuel - Part 1: Formulations and influential parameters," Fuel, vol. 85, no. 17-18, 2006, doi: 10.1016/j.fuel.2006.05.002.
[17] W. Jazair, S. Kubo, Takayasu, Masazumi, Kidoguchi, and T. Y. and Yoshiyuki, "Performance and Emission Characteristics of a Diesel Engine Fueled by Rapeseed Oil Bio-Fuel," J. Mek., no. 33, 2011.
[18] T. Talala, E. Parkkinen & I. Nissinen, "CMOS SPAD Line Sensor with Fine-Tunable Parallel Connected Time-to-Digital Converters for Raman Spectroscopy," in IEEE Journal of Solid-State Circuits, in Press 2022.

It will be obvious to a person skilled in the art that, as technology advances, the inventive concept can be implemented in various ways. The invention and its embodiments are not limited to the example embodiments described above but may vary within the scope of the claims.

## Claims

1. An optical apparatus comprising an optical radiation source (100) , a first optical path arrangement (102), second optical path arrangement (108), an optical wavelength separator (110) and a detector (112) with single photon avalanche detector elements, a timing controller (114), the optical radiation source (100) being configured to generate an optical pulse repeatedly, and direct each optical pulse to the first optical path arrangement (102), wherein the first optical path arrangement (102) is configured to split each optical pulse and direct it to at least two targets (104, 106);
the second optical path arrangement (108) is configured to receive optical radiation from an interaction between each of the optical pulses and each of the targets (104, 106), and the second optical path arrangement (108) is configured to transfer the optical radiation to the optical wavelength separator (110), which is configured to direct different wavelength bands of the optical radiation to different single photon avalanche detector elements of the detector (112);
the first and the second optical path arrangements (102, 108) are configured to cause a propagation delay that is unique for each of the targets (104, 106) in order to cause receptions of the optical radiation from different targets (104, 106) to be temporally separate at the single photon avalanche detector elements of a single array;
the timing controller (114) is configured to trigger detection intervals of the single photon avalanche detector elements ON and OFF synchronously with the propagation delays of the first and second optical paths (102, 108) and generation of each of the optical pulses, and to allow the single photon avalanche detector elements to detect photons of the optical radiation only during each of the detection intervals that are temporally matched with the interactions between each of the optical pulses and the targets (104, 106) and that are shorter than the propagation delays;
the single photon avalanche detector elements of the detector (112) are configured to output electric signals synchronously with the detection intervals for causing the electric signals to correspond to a distribution of wavelengths of the optical radiation of only one of the targets (104, 106) at each output moment.

2. The apparatus of claim 1, **characterized in that** at least one of the first and second optical path arrangements (102, 108) comprise at least one optical fiber.

3. The apparatus of claim 1, **characterized in that** at least one of the first and second optical path arrangements (102, 108) is configured to cause a unique propagation delay for one of the targets (104, 106) with respect to a propagation delay of any other target of the targets (104, 106).

4. The apparatus of claim 1, **characterized in that** a timing controller (114) is configured to trigger the optical radiation source (100) to output the optical pulse and the detection period of the single photon avalanche detector elements in a determined temporal relation with respect to each other.

5. The apparatus of claim 1, **characterized in that** the optical wavelength separator (110) is configured to direct different wavelengths of the optical radiation to different angles toward the single photon avalanche detector elements for causing different single photon avalanche detector elements to receive different wavelength bands of the optical radiation.

6. An optical method, the method comprising generating (800), by an optical radiation source (100), an optical pulse repeatedly;
directing (802) each optical pulse to a first optical path arrangement (102), splitting each optical pulse and directing it to at least two targets (104, 106) by the first optical path arrangement (102);
receiving (804), by a second optical path arrangement (108), optical radiation from an interaction between each of the optical pulses and each of the targets (104, 106),
transferring (806), by the second optical path arrangement (108), the optical radiation to an optical wavelength separator (110);
directing (808), by the optical wavelength separator (110), different wavelength bands of the optical radiation to different single photon avalanche detector elements of a detector (112);
causing (810), by the first and the second optical path arrangements (102, 108), a propagation delay that is unique for each of the targets (104, 106) in order to cause receptions of the optical radiation from different targets (104, 106) to be temporally separate at the single photon avalanche detector elements of a single array;
triggering (812), by a timing controller (114), detection intervals of the single photon avalanche detector elements ON and OFF synchronously with the delays of the first and second optical paths (102, 108) and generation of each of the optical pulses;
allowing (814) the single photon avalanche detector elements to detect photons of the optical radiation only during each of the detection intervals that are temporally matched with the interactions between each of the optical pulses and the targets (104, 106) and that are shorter than the propagation delays;
outputting (816), by the single photon avalanche detector elements of the detector (112), electric signals synchronously with the detection intervals for causing the electric signals to correspond to distribution of wavelengths of the optical radiation of only one of the targets (104, 106) at each output moment.

## Patentansprüche

1. Optische Einrichtung, umfassend:
eine optische Strahlungsquelle (100), eine erste Strahlenganganordnung (102), eine zweite Strahlenganganordnung (108), einen optischen Wellenlängenseparator (110) und einen Detektor (112) mit Einzelphotonen-Lawinendetektorelementen, eine Zeitsteuereinheit (114), wobei die optische Strahlungsquelle (100) dazu ausgebildet ist, wiederholt einen optischen Impuls zu erzeugen und jeden optischen Impuls an die erste Strahlenganganordnung (102) zu lenken, wobei die erste Strahlenganganordnung (102) dazu ausgebildet ist, jeden optischen Impuls aufzuspalten und an mindestens zwei Ziele (104, 106) zu lenken;
die zweite Strahlenganganordnung (108) dazu ausgebildet ist, optische Strahlung aus einer Interaktion zwischen jedem der optischen Impulse und jedem der Ziele (104, 106) zu empfangen, und die zweite Strahlenganganordnung (108) dazu ausgebildet ist, die optische Strahlung an den optischen Wellenlängenseparator (110) zu übertragen, der dazu ausgebildet ist, unterschiedliche Wellenlängenbänder der optischen Strahlung an unterschiedliche Einzelphotonen-Lawinendetektorelementen des Detektors (112) zu lenken;
die erste und die zweite Strahlenganganordnung (102, 108) dazu ausgebildet sind, eine eindeutige Ausbreitungsverzögerung für jedes der Ziele (104, 106) zu bewirken, um zu erreichen, dass Empfänge der optischen Strahlung von unterschiedlichen Zielen (104, 106) an den Einzelphotonen-Lawinendetektorelementen eines einzelnen Arrays zeitlich getrennt sind;
die Zeitsteuereinheit (114) dazu ausgebildet ist, Erfassungsintervalle der Einzelphotonen-Lawinendetektorelemente auszulösen, die synchron mit den Ausbreitungsverzögerungen des ersten und des zweiten Strahlengangs (102, 108) und der Erzeugung jedes optischen Impulses ein- und ausgeschaltet werden, und es zu gestatten, dass die Einzelphotonen-Lawinendetektorelementen Photonen der optischen Strahlung nur während jedes der Erfassungsintervalle erfassen können, die zeitlich mit den Interaktionen zwischen jedem der optischen Impulse und der Ziele (104, 106) abgestimmt sind und kürzer sind als die Ausbreitungsverzögerungen;
die Einzelphotonen-Lawinendetektorelemente des Detektors (112) dazu ausgebildet sind, elektrische Signale synchron mit den Erfassungsintervallen auszugeben, sodass die elektrischen Signale einer Wellenlängenverteilung der optischen Strahlung von nur einem der Ziele (104, 106) in jedem Ausgabemoment entsprechen.

2. Einrichtung nach Anspruch 1, **dadurch gekennzeichnet, dass** mindestens eine der ersten und der zweiten Strahlenganganordnungen (102, 108) mindestens eine optische Faser umfasst.

3. Einrichtung nach Anspruch 1, **dadurch gekennzeichnet, dass** mindestens eine der ersten und der zweiten Strahlenganganordnung (102, 108) dazu ausgebildet ist, eine eindeutige Ausbreitungsverzögerung für eines der Ziele (104, 106) in Bezug auf eine Ausbreitungsverzögerung jedes anderen Ziels der Ziele (104, 106) zu bewirken.

4. Einrichtung nach Anspruch 1, **dadurch gekennzeichnet, dass** eine Zeitsteuereinheit (114) dazu ausgebildet ist, die optische Strahlungsquelle (100) zu veranlassen, den optischen Impuls und die Erfassungsperiode der Einzelphotonen-Lawinendetektorelemente in einer festgelegten zeitlichen Beziehung zueinander auszugeben.

5. Einrichtung nach Anspruch 1, **dadurch gekennzeichnet, dass** der optische Wellenlängenseparator (110) dazu ausgebildet ist, unterschiedliche Wellenlängen der optischen Strahlung in unterschiedlichen Winkeln zu den Einzelphotonen-Lawinendetektorelementen hin zu lenken, um zu bewirken, dass unterschiedliche Einzelphotonen-Lawinendetektorelemente unterschiedliche Wellenlängenbänder der optischen Strahlung empfangen.

6. Optisches Verfahren, wobei das Verfahren umfasst: wiederholtes Erzeugen (800), durch eine optische Strahlungsquelle (100), eines optischen Impulses;
Lenken (802) jedes optischen Impulses an eine erste Strahlenganganordnung (102), Aufspalten jedes optischen Impulses und Lenken davon an mindestens zwei Ziele (104, 106) durch die erste Strahlenganganordnung (102);
Empfangen (804), durch eine zweite Strahlenganganordnung (108), von optischer Strahlung aus einer Interaktion zwischen jedem der optischen Impulse und jedem der Ziele (104, 106);
Übertragen (806), durch die zweite Strahlenganganordnung (108), der optischen Strahlung an einen optischen Wellenlängenseparator (110);
Lenken (808), durch den optischen Wellenlängenseparator (110), unterschiedlicher Wellenlängenbänder der optischen Strahlung an unterschiedliche Einzelphotonen-Lawinendetektorelemente eines Detektors (112);
Bewirken (810), durch die erste und die zweite Strahlenganganordnung (102, 108), einer eindeutigen Ausbreitungsverzögerung für jedes der Ziele (104, 106), um zu erreichen, dass Empfänge der optischen Strahlung von unterschiedlichen Zielen (104, 106) an den Einzelphotonen-Lawinendetektorelementen eines einzelnen Arrays zeitlich getrennt sind;
Auslösen (812), durch eine Zeitsteuereinheit (114), von Erfassungsintervallen der Einzelphotonen-Lawinendetektorelemente, die synchron mit den Verzögerungen des ersten und des zweiten Strahlengangs (102, 108) und der Erzeugung jedes optischen Impulses ein- und ausgeschaltet werden;
Gestatten (814), dass die Einzelphotonen-Lawinendetektorelementen Photonen der optischen Strahlung nur während jedes der Erfassungsintervalle erfassen können, die zeitlich mit den Interaktionen zwischen jedem der optischen Impulse und der Ziele (104, 106) abgestimmt sind und kürzer sind als die Ausbreitungsverzögerungen;
Ausgeben (816), durch die Einzelphotonen-Lawinendetektorelemente des Detektors (112), von elektrischen Signalen synchron mit den Erfassungsintervallen, sodass die elektrischen Signale einer Wellenlängenverteilung der optischen Strahlung von nur einem der Ziele (104, 106) in jedem Ausgabemoment entsprechen.

## Revendications

1. Appareil optique comprenant
une source de rayonnement optique (100), un premier agencement de trajet optique (102), un second agencement de trajet optique (108), un séparateur optique de longueur d'onde (110) et un détecteur (112) avec des éléments de détecteur d'avalanche à photon unique, un contrôleur de synchronisation (114), la source de rayonnement optique (100) étant configurée pour générer une impulsion optique de façon répétée, et diriger chaque impulsion optique vers le premier agencement de trajet optique (102), dans lequel le premier agencement de trajet optique (102) est configuré pour diviser chaque impulsion optique et la diriger vers au moins deux cibles (104, 106) ;
le second agencement de trajet optique (108) est configuré pour recevoir un rayonnement optique provenant d'une interaction entre chacune des impulsions optiques et chacune des cibles (104, 106), et le second agencement de trajet optique (108) est configuré pour transférer le rayonnement optique au séparateur optique de longueur d'onde (110), lequel est configuré pour diriger différentes bandes de longueurs d'onde du rayonnement optique vers différents éléments de détecteur d'avalanche à photon unique du détecteur (112) ;
les premier et second agencements de trajet optique (102, 108) sont configurés pour provoquer un retard de propagation qui est unique pour chacune des cibles (104, 106) afin de provoquer des réceptions du rayonnement optique provenant de différentes cibles (104, 106) qui sont séparées temporellement au niveau des éléments de détecteur d'avalanche à photon unique d'un seul réseau ;
le contrôleur de synchronisation (114) est configuré pour déclencher des intervalles de détection des éléments de détecteur d'avalanche à photon unique MARCHE et ARRÊT de manière synchrone avec les retards de propagation des premier et second trajets optiques (102, 108) et la génération de chacune des impulsions optiques, et pour permettre aux éléments de détecteur d'avalanche à photon unique de détecter des photons du rayonnement optique uniquement pendant chacun des intervalles de détection qui sont temporellement appariés aux interactions entre chacune des impulsions optiques et les cibles (104, 106) et sont plus courts que les retards de propagation ;
les éléments de détecteur d'avalanche à photon unique du détecteur (112) sont configurés pour fournir en sortie des signaux électriques de manière synchrone avec les intervalles de détection pour amener les signaux électriques à correspondre à une distribution de longueurs d'onde du rayonnement optique d'une seule des cibles (104, 106) à chaque instant de sortie.

2. Appareil selon la revendication 1, **caractérisé en ce qu'**au moins un des premier et second agencements de trajet optique (102, 108) comprend au moins une fibre optique.

3. Appareil selon la revendication 1, **caractérisé en ce qu'**au moins un des premier et second agencements de trajet optique (102, 108) est configuré pour provoquer un retard de propagation unique pour l'une des cibles (104, 106) par rapport à un retard de propagation de toute autre cible des cibles (104, 106).

4. Appareil selon la revendication 1, **caractérisé en ce qu'**un contrôleur de synchronisation (114) est configuré pour déclencher la source de rayonnement optique (100) afin qu'elle fournisse en sortie l'impulsion optique et la période de détection des éléments de détecteur d'avalanche à photon unique dans une relation temporelle déterminée l'une par rapport à l'autre.

5. Appareil selon la revendication 1, **caractérisé en ce que** le séparateur optique de longueur d'onde (110) est configuré pour diriger différentes longueurs d'onde du rayonnement optique à différents angles vers les éléments de détecteur d'avalanche à photon unique afin d'amener différents éléments de détecteur d'avalanche à photon unique à recevoir différentes bandes de longueurs d'onde du rayonnement optique.

6. Procédé optique, le procédé comprenant les étapes consistant à faire générer (800), par une source de rayonnement optique (100), une impulsion optique de façon répétée ;
diriger (802) chaque impulsion optique vers un premier agencement de trajet optique (102), diviser chaque impulsion optique et la diriger vers au moins deux cibles (104, 106) par le premier agencement de trajet optique (102) ;
recevoir (804), par un second agencement de trajet optique (108), un rayonnement optique provenant d'une interaction entre chacune des impulsions optiques et chacune des cibles (104, 106),
transférer (806), par le second agencement de trajet optique (108), le rayonnement optique vers un séparateur optique de longueur d'onde (110) ;
diriger (808), par le séparateur optique de longueur d'onde (110), différentes bandes de longueurs d'onde du rayonnement optique vers différents éléments de détecteur d'avalanche à photon unique d'un détecteur (112) ;
provoquer (810), par les premier et second agencements de trajet optique (102, 108), un retard de propagation qui est unique pour chacune des cibles (104, 106) afin de provoquer des réceptions du rayonnement optique provenant de différentes cibles (104, 106) qui sont séparées temporellement au niveau des éléments de détecteur d'avalanche à photon unique d'un seul réseau ;
déclencher (812), par un contrôleur de synchronisation (114), des intervalles de détection des éléments de détecteur d'avalanche à photon unique MARCHE et ARRÊT de manière synchrone avec les retards des premier et second trajets optiques (102, 108) et la génération de chacune des impulsions optiques ;
permettre (814) aux éléments de détecteur d'avalanche à photon unique de détecter des photons du rayonnement optique uniquement pendant chacun des intervalles de détection qui sont temporellement appariés aux interactions entre chacune des impulsions optiques et les cibles (104, 106) et sont plus courts que les retards de propagation ;
fournir en sortie (816), par les éléments de détecteur d'avalanche à photon unique du détecteur (112), des signaux électriques de manière synchrone avec les intervalles de détection pour amener les signaux électriques à correspondre à une distribution de longueurs d'onde du rayonnement optique d'une seule des cibles (104, 106) à chaque instant de sortie.
